**Europäisches Patentamt**

**European Patent Office**

**Office européen des brevets**

(19)

(11) Veröffentlichungsnummer: **0 061 651**

**A2**

## (12) EUROPÄISCHE PATENTANMELDUNG

(21) Anmeldenummer: **82102149.0**

(22) Anmeldetag: **17.03.82**

(51) Int. Cl.³: **A 61 C 13/22**

(30) Priorität: **26.03.81 CH 2076/81**

(43) Veröffentlichungstag der Anmeldung:
**06.10.82 Patentblatt 82/40**

(84) Benannte Vertragsstaaten:
**AT BE CH DE FR GB IT LI LU NL SE**

(71) Anmelder: **Sandhaus, Sami, Dr.**
**4, Avenue de Provence**
**CH-1007 Lausanne(CH)**

(72) Erfinder: **Sandhaus, Sami, Dr.**
**4, Avenue de Provence**
**CH-1007 Lausanne(CH)**

(74) Vertreter: **Troesch, Hans Alfred, Dr. Ing. et al,**
**Walchestrasse 19**
**CH-8035 Zürich(CH)**

(54) **Zahnprothesensteg, Verankerungselement dafür sowie Verfahren zur Herstellung des Zahnprothesensteges.**

(57) Um beim Einsatz von Zahnprothesenstegen den Patienten mit möglichst wenig Konsultationen belasten zu müssen und damit weitgehendst unabhängig vom zahntechnischen Labor zu werden, umfasst ein derartiger Steg Tragelemente (21) und Verankerungen (47, 19). Diese Teile werden vorzugsweise als Normelemente für den Zahnarzt bereitgestellt, während der Behandlung zusammengebaut und an den vorbereiteten Zahnwurzeln (3) befestigt. Auf die Tragelemente (21) werden anschliessend Prothesen, vorzugsweise mittels Reitern gesteckt.

FIG.6

EP 0 061 651 A2

Croydon Printing Company Ltd.

Zahnprothesensteg, Verankerungselement dafür sowie Verfahren
zur Herstellung des Zahnprothesensteges

---

Die vorliegende Erfindung betrifft einen Zahnprothesensteg,
ein Verankerungselement dafür sowie ein Verfahren zur Herstellung des Zahnprothesensteges.

Es ist bekannt, beispielsweise bei Unfallpatienten, deren
Zähne mindestens teilweise ausgebrochen sind, mittels Stegen
die verbleibenden Wurzeln zu verbinden, allenfalls direkt
von Wurzel zu Wurzel, oder, wo dies noch möglich ist, durch
Kombination derartiger Stege mit Kronen und darauf Zahnprothesen aufzubauen.

Derartige Stege werden üblicherweise im zahntechnischen Labor durch Löten, Schweissen, allenfalls Schrauben fertiggestellt, was einerseits eine Mehrzahl von Konsultationen des
Patienten beim Zahnarzt erforderlich macht und anderseits
manchmal einiges Hin und Her zwischen Zahnarzt und zahntechnischem Labor erforderlich macht, bis die notwendige
Präzision erreicht ist.

Die vorliegende Erfindung bezweckt einen Zahnprothesensteg
vorzuschlagen, der ohne  Einschaltung zahntechnischer Laboratorien vom Zahnarzt während der Patientenkonsultation
aufgebaut und eingesetzt werden kann.

Zu diesem Zweck zeichnet er sich dadurch aus, dass er mindestens ein stangenförmiges Prothesentragelement umfasst sowie Verankerungen für dessen Befestigung.

Dadurch, dass das Tragelement mindestens einseitig abgewinkelt ist, oder umbiegbar ist, zur Bildung eines Verankerungsstiftes, wird es möglich, während der Patientenkonsultation den Abstand zwischen zwei verbleibenden Verankerungsstellen, beispielsweise zwischen Zahnwurzel und Zahnwurzel, oder Zahnwurzel und Krone zu messen, das Tragelement entsprechender Länge zu wählen, mit einseitig oder zweiseitig abgewinkelter Partie, vorgefertigt oder durch den Zahnarzt zurechtgebogen, und das Tragelement an den entsprechend vorbereiteten Wurzeln zu verankern.

Dadurch, dass das Tragelement mindestens einseitig eine Längsbohrung aufweist oder als Röhrchen ausgebildet ist, zur Bildung mindestens einer Verankerungsöffnung für Verankerungsstifte, wird es möglich, vorgefertigte Verankerungsstifte bereitzuhalten, die Tragelemente mit diesem zusammenzustecken, um sie dann an den entsprechend vorbereiteten Wurzeln oder Kronen zu befestigen.

Dadurch, dass die Verankerungen vorgefertigte Winkelstücke umfassen, einerseits in Wurzeln einführbar, andererseits mit dem Tragelement verbindbar, muss der behandelnde Arzt lediglich die notwendige Länge des Tragelementes auswählen, oder dieses allenfalls noch auf die erforderliche genaue Länge zuschneiden.

Vorzugsweise umfassen die Verankerungen für Zahnwurzeln Stifte und/oder Röhrchen, wobei letztere den Vorteil mit sich bringen, dass die Wurzel durch ein einmal darin eingelassenes Röhrchen nach Entfernen des Prothesentragelementes durch die Röhrchenöffnung zugänglich bleibt.

Eine höchst einfache Aufbauweise eines derartigen Zahnprothesensteges, die praktisch im Munde des Patienten vorgenommen werden kann, wird dadurch erreicht, dass Tragelement und Verankerungen mittels Steck- und/oder Schraubverbindungen miteinander verbindbar sind, wobei vorzugsweise Steckverbindungen zur Fixierung noch festgeklemmt werden.

Ueblicherweise müssen die verbleibenden Zahnwurzeln bis praktisch auf die Höhe des Zahnfleisches abgearbeitet werden, wobei sichergestellt werden muss, dass die Stege mit gewissem Abstand vom Zahnfleisch geführt werden können. Weiter muss die Kaubelastung flächenhaft aufgenommen werden können.

Dies wird dadurch erreicht, dass Abstützorgane für die Tragelemente vorgesehen sind.

Diese Abstützorgane werden vorzugsweise als Kragen durch metallgegossene Wurzelaufsätze oder durch um den Wurzelhals gelegte kunststoffausgegossene Ringe gebildet. Solche Ringe werden vorzugsweise aus Röhrchenstummeln gebildet, die manuell verformbar sind, so dass sie über die Wurzeln gelegt und durch Fingerdruck an deren Form angepasst werden können, bevor sie ausgegossen werden.

An Kronen umfassen die Verankerungen vorzugsweise Röhrchenstummel, Stifte oder Bohrungen.

Die Arbeit des behandelnden Arztes wird dadurch wesentlich erleichtert, dass Verankerungselemente für die erwähnten Stege vorgefertigte Winkelstücke umfassen, die aus draht- und/oder röhrchenförmigem Material gefertigt sind. Für die Verankerung von Stegen beidseits von Eckzahnpartien werden dreibeinförmige, aus draht- und/oder röhrchenförmigem

- 4 -

Material gebildete Teile  bereitgestellt.

Das Verfahren zur Herstellung eines Zahnprothesensteges eingangs genannter Art zeichnet sich dadurch aus, dass man den Steg vorzugsweise aus vorgefertigten Normteilen modular, unmittelbar beim Patienten zusammenbaut.

Die Erfindung wird anschliessend beispielsweise anhand von Figuren erläutert.

Es zeigen:

Fig. 1     die schematische Darstellung einer Gebisspartie mit einer ersten Ausführungsvariante eines zwischen zwei Wurzeln zu befestigenden Steges,

Fig. 2     die Ausbildung einer Abstützung für die Stegverankerung,

Fig. 3     eine weitere Variante der Abstützung,

Fig. 4a, b, c     drei Ausführungsvarianten von Tragelementen für die Prothesen und deren Verankerungen,

Fig. 5     die Verbindung eines Steges, einerseits an einer Wurzel, anderseits an einer Krone,

Fig. 6     eine schematische Darstellung analog zu Fig. 1, mit der Bereitstellung eines beidseits der Eckzahnpartie sich erstreckenden Steges,

Fig. 7a, b, c     drei weitere bevorzugte Ausbildungsvarianten von Abstützungen zwischen Wurzel und Tragelement des Steges,

Fig. 8    den Querschnitt durch einen Giessformring, wie an der Abstützung gemäss Fig. 7c verwendbar,

Fig. 9    die schematische Darstellung einer mit Reiter auf dem Tragelement des Steges fixierbaren Prothese,

Fig. 10   eine schematische Darstellung der mechanischen Fixierung zwischen Tragelement und Verankerungen eines Steges.

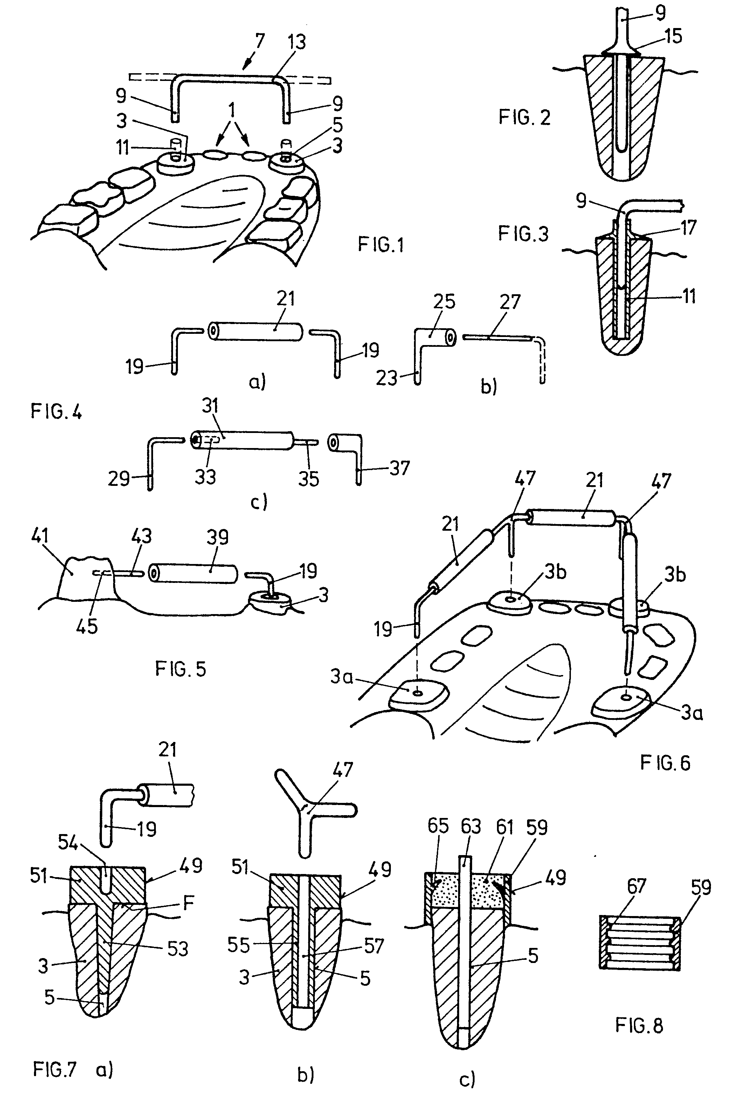

In Fig. 1 ist schematisch eine Gebisspartie, ohne Anspruch auf anatomische Richtigkeit, dargestellt, worin Vorderzähne 1 ausgebrochen sind und im Bereiche der Eckzähne Zahnwurzeln 3 durch Abschleifen vorbereitet worden sind. In die Zahnwurzeln 3 werden in üblicher Art und Weise mittels Normbohrern Kanäle 5 eingebohrt. Als Steg 7 wird in dieser Ausführungsvariante ein Draht- oder Röhrchenstück verwendet, das hier beidseitig, entweder vorgefertigt oder durch den Zahnarzt, U-förmig zu Verankerungspartien 9 umgebogen ist. Die umgebogenen Verankerungsenden 9 werden in die vorbereiteten Wurzelbohrungen 5 eingelassen, dort vorzugsweise festgekittet oder es werden, vorzugsweise und, wie gestrichelt angedeutet, in die vorbereiteten Wurzelbohrungen 5 Röhrchen oder Stifte 11 eingelassen, woran dann die Verankerungspartien 9, entsprechend als Stifte oder Röhrchenenden ausgebildet, befestigt werden.

Da das eigentliche Tragelement 13 des Steges 7 mit Bezug auf das Zahnfleisch auf Distanz gehalten werden muss, um nachmalig die Prothesen aufstecken zu können, und da die beim Kauen entstehende Belastung an den Verankerungen zwischen den Partien 9 und der Wurzel 3 flächenhaft aufgenommen werden muss, können nebst den noch zu beschreibenden, bevorzugten Abstütztechniken gemäss den Fig. 7a - c, wie in Fig. 2 dargestellt, entweder an den Verankerungspartien 9 Abstützkragen 15 vorgesehen sein, oder, gemäss Fig. 3,
bei in die Wurzelbohrungen 5 eingelassenen Röhrchen 11,
an letzteren Abstützkragen 17.

In Fig. 4a, b und c sind drei Varianten des Steges grundsätzlich analog zu Fig. 1 dargestellt, wobei jedoch die
Verankerungspartien und die eigentlichen Tragelemente nicht
einteilig ausgebildet sind.

Gemäss Fig. 4a umfassen die Verankerungen zwei aus stiftförmigem Material gefertigte Winkelstücke 19, die einerseits analog zur Darstellung von Fig. 1 in die Wurzelbohrungen 5 eingelassen werden und anderseits in ein röhrchenförmig ausgebildetes Tragelement 21 gesteckt werden.

In Fig. 4b ist ein winkelförmiges Verankerungselement 23
einseitig zum Einlassen in die Wurzeln stiftförmig ausgebildet, anderseits als Röhrchenstummel 25, worin der nun
seinerseits stiftförmig ausgebildete Tragteil 27 eingesteckt wird, der auf seiner anderen Seite entweder umgebogen, zur direkten Bildung einer weiteren Verankerungspartie, oder mit einem analog zum Teil 23 ausgebildeten zweiten
Verankerungselement verbunden wird.

In Fig. 4c ist eine Kombinationsmöglichkeit der in den
Fig. 4a und 4b aufgezeigten Varianten dargestellt, worin
das eine Verankerungselement 29 analog zu Fig. 4a aus
stiftförmigem abgewinkeltem Material gefertigt ist, ein
Tragelement 31 einerseits zur Verbindung mit dem Teil 29
eine Bohrung 33 aufweist, anderseits einen Stift 35 trägt,
der nun in das analog zum Teil 23 von Fig. 4b ausgeführte
Verankerungselement 37 gesteckt wird.

In Fig. 5 ist schematisch dargestellt, wie ein Tragelement
39 analog zum Element 21 gemäss Fig. 4a ausgebildet, einerseits an einer Krone 41 verankert wird, anderseits mittels eines Winkelelementes 19 analog zur Darstellung von Fig. 4a an einer Wurzel 3. Selbstverständlich kann dabei die Verbindung zwischen Tragelement und Wurzel in einer anderen, der anhand von Fig. 1 bis 4 dargestellten Varianten erfolgen. An der Krone 41 ist in der dargestellten Variante ein Verankerungsstift 43, entweder festgelötet oder -geschweisst, oder aber dadurch an der Krone 41 befestigt, dass er am entsprechenden Ende als Gewindestift ausgebildet ist, und in eine vorgesehene Gewindebohrung 45 an der Krone eingeschraubt wird, oder aber in eine entsprechend dimensionierte Bohrung an der Krone 41 eingepresst wird. Werden Krone 41 und Stift 43 verlötet oder verschweisst, so muss dies wiederum im zahntechnischen Labor geschehen, während bei einer Ausbildung mit Schraub- oder Steckverbindung im zahntechnischen Labor lediglich die entsprechende Bohrung mit Normmassen vorbereitet werden muss und der Stift 43 durch den Zahnarzt eingeschraubt oder eingepresst werden kann.

In Fig. 6 ist in Analogie zu Fig. 1 schematisch eine Gebisspartie dargestellt, bei welcher bis auf Molarzahnwurzeln 3a und Eckzahnwurzeln 3b alle übrigen Zähne ausgebrochen sind. Hier ist es nun notwendig, beidseits der Eckzahnpartie relativ zueinander abgewinkelte Stege vorzusehen. Hierzu wird ein dreibeinförmiges Verankerungselement 47 eingesetzt, dessen eines Bein, wie beschrieben, in die Eckzahnwurzel 3b eingelassen wird und dessen andere Beine je mit Tragelementen 21 gemäss Fig. 4a verbunden werden, wobei sich auch hier versteht, dass die Verbindung zwischen dem Verankerungselement 47 und den Tragelementen in einer der anhand von Fig. 1 bis und mit 4 dargestellten Varianten erfolgen kann.

- 8 -

Vorzugsweise werden auch diese dreibeinförmigen Verankerungselemente 47 als vorgefertigte Normbauteile für den Zahnarzt
bereitgehalten und allenfalls mit Abstützungen 11 versehen.

In den Fig. 7a bis und mit 7c sind drei bevorzugte Varianten
zur Ausbildung der Abstützung zwischen vorbereiteten Zahnwurzeln 3 und den Tragelementen 21 resp. Verankerungselementen dargestellt.

Gemäss Fig. 7a wird in die Bohrung 5 der Wurzel 3 ein Zwischenstück 49 eingelassen, das eine Metallkappe 51 umfasst,
mit einem Verankerungsstift 53. Die Metallkappe 51 umfasst
eine Bohrung 54, worin die Verankerung 19, beispielsweise
gemäss Fig. 4a eingelassen wird. Die Befestigung zwischen
Abstützung 49 und Verankerung 19 erfolgt beispielsweise
durch Verleimen oder dadurch, dass die Bohrung 54 als Gewindebohrung ausgebildet ist, Stift 19 endständig als Gewindestift oder dass der Stift 19 in die entsprechend dimensionierte Bohrung 54 eingepresst wird. Das Tragelement 21
wird durch die Abstützung 49 einerseits auf Distanz gehalten, anderseits wird seine Belastung nicht auf den Stift
53 übertragen, sondern auf die ganze Fläche F der vorbereiteten Wurzel.

Gemäss Fig. 7b umfasst die Abstützung 49 nicht einen Stift,
sondern ein in die Wurzelbohrung 5 eingelassenes Röhrchen 55,
dessen Oeffnung durch die Kappe 51 durchragt. In diese Bohrung wird der Verankerungsstift, wie in der Fig. beispielsweise dargestellt, einer Dreibeinverankerung 47 eingelassen,
daran festgeklebt, festgeschraubt oder festgeklemmt. Diese
Ausführungsvariante hat gegenüber derjenigen von Fig. 7a
den grossen Vorteil, dass die Wurzel durch die Bohrung 57 auch
später, nach Entfernen des Steges und der Verankerung 47
zugänglich bleibt.

In Fig. 7c ist eine weitere Variante der Abstützung 49 dargestellt, die nun im Unterschied zu den Varianten gemäss den Fig. 7a und 7b auch unabhängig vom zahntechnischen Labor hergestellt werden kann. Gemäss dieser Ausführungsvariante wird ein Formring 59 um den Stummel der Wurzel gelegt, der beispielsweise aus dünnwandigem Metallrohr besteht, so dass er auf den Stummel gestülpt und mit den Fingern an dessen Form angepasst werden kann. Anschliessend wird das Innere des Formringes 59 ausgegossen, beispielsweise mit Epoxyharz, so dass eine Füllung 61 entsteht. Zur Beibehaltung des bereits anhand von Fig. 7b erläuterten Vorteiles wird dabei vor dem Ausgiessen ein Verankerungsröhrchen 63 in die Bohrung 5 eingelassen, welches über die durch Ausgiessen hergestellte Kappe 61 vorragt. Zur Sicherstellung, dass die Füllmasse 61 am Formring 59 sicher verankert ist, wird letzterer auf seiner Innenseite mit einragenden Ankern 65 versehen, die gemäss Fig. 7c zungenförmig oder gemäss Fig. 8 durch innenliegende Noppen 67 am Ring 59 gebildet sind.

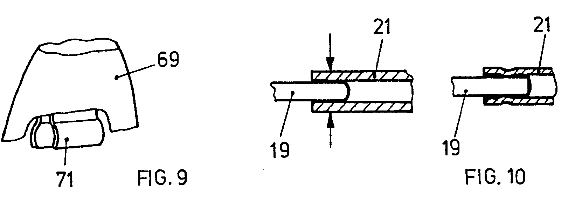

In Fig. 9 ist eine teilweise ausgebrochene Prothese 69 dargestellt, an deren Basis ein Reiter 71 befestigt ist, so dass die Prothese auf die Tragelemente, wie beschrieben, aufgesteckt werden kann.

Die Steckverbindungen zwischen Röhrchen und Stiften, je nach Ausbildungsvariante an den Verankerungen oder am Tragteil vorgesehen, werden durch Festklemmen gesichert, wie dies in Fig.10 schematisch dargestellt ist. Mit dem beschriebenen Zahnprothesensteg wird es nun möglich, dass der Zahnarzt ihn ohne Beizug eines zahntechnischen Labors unmittelbar bei der Behandlung des Patienten zusammenstellt und einbaut. Dazu werden vorzugsweise vorgefertigte Bauelemente, bestehend aus Normverankerungen und -Tragelementen, bereitgestellt, die der Zahnarzt nach allenfalls vorzunehmender exakter Dimensionierung der Tragelemente zusammenstellen
und dann einbauen kann.

Patentansprüche:

1. Zahnprothesensteg, dadurch gekennzeichnet, dass er mindestens ein stangenförmiges Prothesentragelement (13, 21, 27, 31, 39) umfasst sowie Verankerungen (9, 11, 19, 23, 29, 37, 43, 47, 53, 54, 55, 63) für dessen Befestigung.

2. Zahnprothesensteg nach Anspruch 1, dadurch gekennzeichnet, dass das Tragelement (13) mindestens einseitig abgewinkelt (9) oder umbiegbar ist, zur Bildung einer Verankerung.

3. Zahnprothesensteg nach Anspruch 1, dadurch gekennzeichnet, dass das Tragelement (21, 31) mindestens einseitig eine Längsbohrung (33) aufweist, oder als Röhrchen (21) ausgebildet ist, zur Bildung mindestens einer Verankerungsöffnung für Verankerungsstifte (19, 29, 43).

4. Zahnprothesensteg nach Anspruch 1, dadurch gekennzeichnet, dass die Verankerung an Kronen (41) oder Wurzeln (3) befestigte resp. befestigbare Partien (9, 11, 19, 23, 29, 37, 43, 47, 53, 54, 55, 63) umfasst.

5. Zahnprothesensteg nach Anspruch 1, dadurch gekennzeichnet, dass die Verankerungen vorzugsweise vorgefertigte Winkelstücke (19, 23, 29, 47) umfassen.

6. Zahnprothesensteg nach Anspruch 1, dadurch gekennzeichnet, dass die Verankerungen Stifte (19, 23, 29, 53) und/oder Röhrchen (11, 55, 63) umfassen.

7. Zahnprothesensteg nach Anspruch 1, dadurch gekennzeichnet, dass Tragelement und Verankerungen mittels Steckverbindungen und/oder Schraubverbindungen verbindbar sind, bei Steckverbindungen vorzugsweise noch festklemmbar.

8. Zahnprothesensteg nach Anspruch 1, dadurch gekennzeichnet, dass Abstützorgane (15, 17, 49, 59, 61) für die Tragelemente vorgesehen sind.

9. Zahnprothesensteg nach Anspruch 8, dadurch gekennzeichnet, dass die Abstützorgane kragenförmig (15, 17) ausgebildet sind, oder als Kappen (51, 61).

10. Zahnprothesensteg nach Anspruch 9, dadurch gekennzeichnet, dass die Kappen (51) metallgegossen sind oder einen um eine Wurzel (3) legbaren Ring (59), vorzugsweise als Röhrchenstummel ausgebildet, umfassen, dessen Inneres mittels Kunststoff (61) ausgegossen ist.

11. Zahnprothesensteg nach Anspruch 10, dadurch gekennzeichnet, dass der Ring (59) Anker (65, 67) für den Kunststoff aufweist.

12. Zahnprothesensteg nach Anspruch 10, dadurch gekennzeichnet, dass der Ring (59) manuell verformbar ist.

13. Zahnprothesensteg nach Anspruch 1, dadurch gekennzeichnet, dass die Verankerungen Bohrungen oder Stifte oder Röhrchenstummeln an Kronen umfassen.

14. Verankerungselement für Zahnprothesenstege nach Anspruch 1, dadurch gekennzeichnet, dass es als Winkelstück aus draht- und/oder röhrchenförmigem Material gebildet ist.

15.   Verankerungselement für Zahnprothesenstege nach Anspruch 1, dadurch gekennzeichnet, dass es als Dreibeinstück,
aus draht- und/oder röhrchenförmigem Material, gefertigt ist.

16.   Verfahren zur Herstellung eines Zahnprothesensteges
nach Anspruch 1, dadurch gekennzeichnet, dass man den Steg
vorzugsweise aus vorgefertigten Normteilen modular, unmittelbar beim Patienten zusammenbaut.

0061651

FIG. 1

FIG. 2

FIG. 3

FIG. 4

a)
b)
c)

FIG. 5

FIG. 6

FIG. 7    a)    b)    c)

FIG. 8

FIG. 9

FIG. 10